# EUROPEAN PATENT APPLICATION

(11) **EP 4 775 643 A1**
(43) Date of publication of application: **15.07.2026**
(21) Application number: 24862692.1
(22) Date of filing: 29.08.2024
(51) Int. Cl.: C09K 5/14, F25B 9/00, F25B 9/14

(54) **COLD STORAGE MEDIUM, COLD STORAGE APPARATUS, AND CRYOGENIC REFRIGERATOR**

(30) Priority: 07.09.2023 JP 2023145438
(71) Applicant: National Institute for Materials Science, Tsukuba-shi, Ibaraki 305-0047 (JP)
(72) Inventor: TERADA, Noriki, Tsukuba-shi, Ibaraki 305-0047 (JP); MAMIYA, Hiroaki, Tsukuba-shi, Ibaraki 305-0047 (JP); SAITO, Akiko, Tsukuba-shi, Ibaraki 305-0047 (JP); TAKEYA, Hiroyuki, Tsukuba-shi, Ibaraki 305-0047 (JP); MASUYAMA, Shinji, Oshima-gun, Yamaguchi 742-2193 (JP)
(74) Representative: Graf von Stosch Patentanwaltsgesellschaft mbH
(86) International application number: PCT/JP2024/030952
(87) International publication number: WO 2025/053040

(57) **Abstract**

To reduce the amount of rare-earth metal, such as Ho and Er, used in a regenerator material for a cryogenic refrigerator, a regenerator material (15) for a cryogenic refrigerator contains a crystal of CuFe₁₋ₓMₓO₂ (where M is a metal element other than Fe), and, in a temperature region of not higher than 10 K, CuFe₁₋ₓMₓO₂ exhibits antiferromagnetism and has higher volumetric specific heat than lead.

## Description

### Technical Field

The present invention relates to a regenerator material, a regenerator, and a cryogenic refrigerator.

### Background Art

A Gifford-McMahon (GM) refrigerator is known as an example of a cryogenic refrigerator that is capable of cooling a target object to a low temperature (for example, 4.2 K, which is the temperature of liquid helium). The GM refrigerator includes: a compressor that compresses helium gas; and a regenerator material that performs heat exchange with the compressed helium gas, and achieves the above-described low-temperature environment by expanding the helium gas cooled by the regenerator material. Note that other examples of the cryogenic refrigerator to which the same regenerator material as in the GM refrigerator is applicable include a Stirling refrigerator and a pulse tube refrigerator. These cryogenic refrigerators are classified as regenerative refrigerators. Further, these cryogenic refrigerators are sometimes referred to simply as low-temperature refrigerators or low-temperature regenerative refrigerators.

A material used as a regenerator material for generating a low temperature is required to have relatively high specific heat even in a low-temperature region (for example, a temperature region of not lower than 4.2 K and not higher than 10 K).

For example, lead is known as a material having relatively high specific heat in the low-temperature region. However, since the specific heat of lead is attributable to lattice vibration, the specific heat of lead decreases as the temperature becomes lower (as the temperature approaches 4.2 K). Further, at present, the use of lead in electrical products is prohibited in principle. Therefore, in current regenerator materials, a bismuth alloy is used as a substitute for lead. Like the specific heat of lead, the specific heat of a bismuth alloy is attributable to lattice vibration. Thus, the specific heat of a bismuth alloy decreases as the temperature becomes lower. In addition, the specific heat of a bismuth alloy is lower than the specific heat of lead. Note that the specific heat used in the present specification is volumetric specific heat which is specific heat per volume.

Thus, in order to secure specific heat in the above-described low-temperature region, specific heat attributable to a magnetic phase transition (hereinafter referred to as magnetic specific heat) is utilized in a regenerator material. Examples of materials that exhibit a magnetic phase transition in the above-described low-temperature region include rare-earth intermetallic compounds such as HoCu₂ and Er₃Ni. For example, in the problem to be solved by the invention of Patent Literature 1, mention is made of a regenerator material in which HoCu₂ and Er₃Ni are filled in a stacked state. Further, Patent Literature 1 describes a regenerator material that uses a magnetic substance represented by R₁₋ₓ(Ge_{1-y}M_{y})ₓ (where R represents at least one kind of rare-earth element selected from Y, La, Ce, Pm, Sm, Eu, Gd, Tb, Dy, Ho, Er, Tm, and Yb; M represents at least one kind of element selected from Ag, Au, Al, Ga, In, Sn, Bi, Pd, Pt, Zn, Rh, Ir, Ru, Mn, Cr, Mo, W, V, Nb, Ta, Ti, Zr, and Hf; and x and y satisfy 0.1 ≤ x ≤ 0.8 and 0 ≤ y ≤ 0.5 in terms of atomic ratio, respectively). Further, in Patent Literature 2, a material for a regenerator material utilizing magnetic specific heat is exemplified by ErIn₃.

The magnetic phase transition temperatures of these rare-earth intermetallic compounds are present in the above-described low-temperature region. Thus, in these rare-earth intermetallic compounds, magnetic specific heat is retained even in the low-temperature region. Further, the magnetism in these rare-earth intermetallic compounds is borne by spins of 4f electrons constituting rare-earth metals such as Ho and Er. The 4f electrons of rare-earth metals can have a large magnetic moment due to the number of outermost unpaired electrons. Therefore, in rare-earth intermetallic compounds, high magnetic specific heat can be retained even in the low-temperature region by appropriately selecting a combination of a rare-earth metal and a transition metal.

### Citation List

### [Patent Literatures]

[Patent Literature 1] Japanese Patent Application Publication Tokukai No. 2004-143341
[Patent Literature 2] Japanese Patent Application Publication Tokukaihei No. 11-108479

### Summary of Invention

### Technical Problem

However, since rare-earth metals contained in rare-earth intermetallic compounds are rare, the rare-earth metals tend to be expensive when compared with transition metals. The use of rare-earth intermetallic compounds for a regenerator material is one factor that contributes to an increase in the manufacturing cost of a GM refrigerator.

An aspect of the present invention has been made in view of the above-described problem, and an object thereof is to reduce the amount of rare-earth metals, such as Ho and Er, used in a regenerator material for a cryogenic refrigerator which is exemplified by a GM refrigerator.

### Solution to Problem

In order to solve the above problem, a regenerator material in accordance with an aspect of the present invention is a regenerator material for a cryogenic refrigerator, the regenerator material containing a crystal of CuFe₁₋ₓMₓO₂ (where M is a metal element other than Fe). The present regenerator material employs a configuration in which, in a temperature region of not higher than 10 K, CuFe₁₋ₓMₓO₂ exhibits antiferromagnetism and has volumetric specific heat, which is specific heat per volume, higher than the volumetric specific heat of lead.

In order to solve the above-described problem, a regenerator in accordance with an aspect of the present invention includes a regenerator material in accordance with an aspect of the present invention.

In order to solve the above-described problem, a cryogenic refrigerator in accordance with an aspect of the present invention includes the regenerator in accordance with an aspect of the present invention.

### Advantageous Effects of Invention

According to an aspect of the present invention, it is possible to reduce the amount of rare-earth metals, such as Ho and Er, used in a regenerator material that constitutes a cryogenic refrigerator.

### Brief Description of Drawings

Fig. 1 is a conceptual diagram of a Gifford-McMahon refrigerator in accordance with Embodiment 1 of the present invention.
Fig. 2 is a magnetic phase diagram of CuFe₁₋ₓAlₓO₂.
Fig. 3 is a magnetic phase diagram of CuFe₁₋ₓGaₓO₂.
Fig. 4 is a flowchart of a production method in accordance with Embodiment 2 of the present invention.
Fig. 5 is an image of CuFe_{0.98}Al_{0.02}O₂, which is Example 4 of the present invention, in pellet form before a pulverization step illustrated in Fig. 4 is carried out.
Fig. 6 is an image of CuFe_{0.98}Al_{0.02}O₂, which is Example 4 of the present invention, in powder form after the pulverization step illustrated in Fig. 4 has been carried out.
Fig. 7 is X-ray diffraction patterns of CuFe₁₋ₓAlₓO₂ in pellet form in accordance with Examples of the present invention. Note that the lowermost part of Fig. 7 also shows calculated values of an X-ray diffraction pattern in a polycrystal of CuFeO₂.
Fig. 8 is a graph showing temperature dependence of specific heat of CuFe₁₋ₓAlₓO₂ in powder form in accordance with Examples of the present invention. Note that Fig. 8 also shows temperature dependence of specific heat of lead.
Fig. 9 is a graph showing temperature dependence of cooling capacities of a regenerator material composed of Example 2 and lead, a regenerator material composed of Example 4 and lead, a regenerator material composed of HoCu₂ and lead, and a regenerator material composed of lead.
Fig. 10 is a graph showing temperature dependence of cooling capacities of a regenerator material composed of Example 2 and lead, a regenerator material composed of Example 3 and lead, a regenerator material composed of Example 4 and lead, a regenerator material composed of HoCu₂ and lead, and a regenerator material composed of lead.

### Description of Embodiments

### [Embodiment 1]

### <Gifford-McMahon refrigerator>

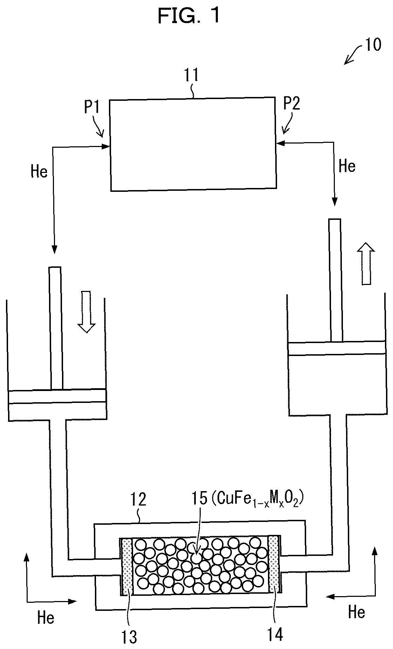

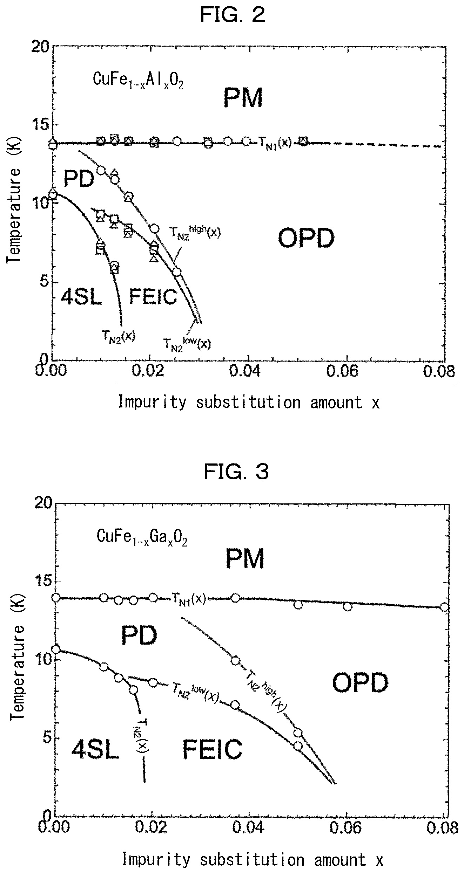

A Gifford-McMahon (GM) refrigerator 10 in accordance with Embodiment 1 of the present invention will be described with reference to Figs. 1 to 3. The GM refrigerator 10 is configured in the same manner as an existing Gifford-McMahon refrigerator, except for a regenerator material 15 which will be described later. Thus, the GM refrigerator 10 is briefly described in the present embodiment. Fig. 1 is a conceptual diagram of the GM refrigerator 10. Figs. 2 and 3 are magnetic phase diagrams of CuFe₁₋ₓAlₓO₂ and CuFe₁₋ₓGaₓO₂, respectively (Magnetic phase diagram of multiferroic delafossite CuFe1-yGayO2N. Terada, T. Nakajima, S. Mitsuda and H. Kitazawa, J. Phys. Conference Series 145 012071 (2009)). Note that a Gifford-McMahon refrigerator is an example of a cryogenic refrigerator. Other examples of the cryogenic refrigerator include a Stirling refrigerator and a pulse tube refrigerator. These cryogenic refrigerators are classified as regenerative refrigerators. Further, these cryogenic refrigerators are sometimes referred to simply as low-temperature refrigerators or low-temperature regenerative refrigerators.

As illustrated in Fig. 1, the GM refrigerator 10 includes a compressor 11 and a regenerator 12. Further, the regenerator 12 includes a pair of stoppers 13 and 14 and a regenerator material 15. Note that, since Fig. 1 is a conceptual diagram, only a regenerator 12 at a final stage is depicted in Fig. 1. However, the GM refrigerator 10 may further include a regenerator that is disposed at a stage preceding the regenerator 12 and that is at one stage or at a plurality of stages. Note that a specific configuration of the GM refrigerator is described in, for example, Patent Literature 2 (for example, Fig. 1). Therefore, detailed description of the GM refrigerator is omitted here. Note that the regenerator material 15 of the GM refrigerator 10 corresponds to a regenerator material 24 of a GM refrigerator described in Patent Literature 2.

The compressor 11 includes ports P1 and P2 which are a pair of ports. The port P1 is a port from which compressed helium (He) gas is discharged. The port P2 is a port to which He gas to be compressed is supplied.

The ports P1 and P2 are each connected to the regenerator 12. Note that two cylinders depicted in Fig. 1 represent a magnitude relationship between a pressure of He gas at a stage preceding the regenerator 12 and a pressure of He gas at a stage subsequent to the regenerator 12. The cylinder located on the left side in Fig. 1 represents an image of a cylinder to which the He gas compressed by the compressor 11 is supplied. Further, the cylinder located on the right side in Fig. 1 represents an image of a cylinder through which He gas expanded at a stage subsequent to the regenerator 12 is returned to the compressor 11. That is, compressed high-pressure He gas is supplied to the regenerator 12, and the He gas is expanded at the stage subsequent to the regenerator 12, resulting in becoming low pressure.

The regenerator 12 is a tubular member that has openings provided at both ends thereof. The pair of stoppers 13 and 14 are provided at the respective openings at both ends. Each of the pair of stoppers 13 and 14 is configured to retain the regenerator material 15 while allowing He gas to pass therethrough.

The interior of the regenerator 12 is filled with the regenerator material 15 in powder form. The GM refrigerator 10 is designed such that the diameter of each hole provided in the pair of stoppers 13 and 14 is smaller than the particle diameter of a material that constitutes the regenerator material 15. Therefore, the regenerator material 15 is confined inside the regenerator 12. In this way, the regenerator 12 functions as a housing that accommodates the regenerator material 15, together with the pair of stoppers 13 and 14.

### <Regenerator material>

The regenerator material 15 is a regenerator material for a cryogenic refrigerator. In the present embodiment, a Gifford-McMahon refrigerator is used as an example of the cryogenic refrigerator. Note, however, that the regenerator material 15 is also applicable to a Stirling refrigerator and a pulse tube refrigerator, which are other examples of the cryogenic refrigerator. The regenerator material 15 contains a crystal of CuFe₁₋ₓMₓO₂ (where M is a metal element other than Fe). In a temperature region of not higher than 10 K, CuFe₁₋ₓMₓO₂ is configured to exhibit antiferromagnetism and have higher specific heat than lead. Note that the specific heat used below is volumetric specific heat, which is specific heat per volume. Further, the term "crystal" encompasses a single crystal and a polycrystal. Therefore, CuFe₁₋ₓMₓO₂ may be either a single crystal or a polycrystal. The regenerator material 15 is an aspect of the present invention, similarly to the GM refrigerator 10.

In the regenerator material 15, it is preferable that M be at least one of Al, Ga, Mn, and Rh. Further, in the regenerator material 15, it is more preferable that M be Al, and a substitution amount x of Fe substituted with M satisfies 0 ≤ x ≤ 0.2.

In the present embodiment, as a method for measuring the diameter of particles of CuFe₁₋ₓMₓO₂, an image of the particles is acquired by optical observation of appearances of the particles, and image analysis is performed on the image to calculate the particle diameter. Examples of a device for measuring such a particle diameter include a dynamic image type particle diameter distribution measurement device (QICPIC). The QICPIC randomly selects particles to be observed from a particle group, acquires an image of the selected particles, and performs image analysis. In this image analysis, the volume of the particle is derived, a sphere having the derived volume is assumed, and the diameter of the sphere is derived. That is, the QICPIC derives the diameter by converting the shape of an irregularly shaped particle into a substantially spherical shape on a volume basis. Note that the shapes and particle diameters of the particles of CuFe₁₋ₓMₓO₂ vary. Thus, it is preferable to perform the above-described image analysis on a plurality of particles and regard, as the particle diameter, a representative value (average value) of a plurality of diameters obtained. The number of particles on which the image analysis is performed is not limited, but is set to 100 or more particles in the present embodiment. It is preferable that the particle diameter of CuFe₁₋ₓMₓO₂ be not less than 180 µm and not more than 500 µm when measured by using this measurement method.

In the regenerator material 15, the substitution amount x may be x = 0. That is, in an aspect of the present invention, the compound represented by general formula CuFe₁₋ₓMₓO₂ may be CuFeO₂. Further, CuFe₁₋ₓMₓO₂ including CuFeO₂ may be a single crystal or may be a polycrystal.

Further, while containing the above-described CuFe₁₋ₓMₓO₂ as a first compound, the regenerator material 15 may further contain a second compound having a Néel temperature in a temperature region of not lower than 5 K and not higher than 10 K. As will be described in Examples later, although the specific heat of CuFe₁₋ₓMₓO₂ in an aspect of the present invention is higher than the specific heat of lead in a temperature region of not higher than 10 K, a gain in specific heat attributable to magnetic specific heat of CuFe₁₋ₓMₓO₂ tends to be small in a temperature region close to 5 K. Therefore, it is preferable to combine the above-described second compound with CuFe₁₋ₓMₓO₂ in order to obtain specific heat in the temperature region close to 5 K. Further, in a case where the regenerator material 15 contains the first compound and the second compound, the first compound and the second compound may be filled together into one regenerator or may be individually filled into different regenerators. In other words, the regenerator 12 accommodating the regenerator material 15 may be one regenerator or may be a plurality of regenerators to which different compounds that constitute the regenerator material are assigned. Further, in the case where the regenerator material 15 contains the first compound and the second compound, the regenerator material containing the first compound is an example of a first regenerator material, and the regenerator material containing the second compound is an example of a second regenerator material. In this case, it is preferable that the second regenerator material be disposed further toward a low-temperature side than the first regenerator material. Since the first regenerator material and the second regenerator material are disposed in this order, He gas discharged from the compressor 11 is first subjected to heat exchange by the first regenerator material and then subjected to heat exchange by the second regenerator material.

Further, examples of the above-described second compound include Gd₂O₂S.

Note that the regenerator material 15 can contain the second compound as described above, and may further contain a third compound or a metal corresponding thereto. It is preferable that the third compound or the metal corresponding thereto do not contain a rare-earth metal. The regenerator material containing the third compound or the metal corresponding thereto is an example of a third regenerator material. In this case, the third regenerator material is preferably disposed further toward a high-temperature side than the first regenerator material, and the second regenerator material is preferably disposed further toward a low-temperature side than the first regenerator material. That is, it is preferable that the first regenerator material, the second regenerator material, and the third regenerator material be disposed in the order of the third regenerator material, the first regenerator material, and the second regenerator material from the high-temperature side to the low-temperature side. Examples of the third compound or the metal corresponding thereto include lead (Pb), bismuth (Bi), and a bismuth alloy. Note that the composition of the bismuth alloy is not limited, and examples of a metal other than bismuth contained in the bismuth alloy include antimony and tin. Further, the amount of metal other than bismuth contained in the bismuth alloy is also not limited, and examples of the content of antimony in the entire bismuth alloy is not less than 5% and not more than 10%. Further, the bismuth alloy may contain a trace amount of additive element, separately from antimony and tin described above. The bismuth alloy configured in this manner can increase hardness as compared with bismuth, but is considered to decrease specific heat.

### (Regarding metal element)

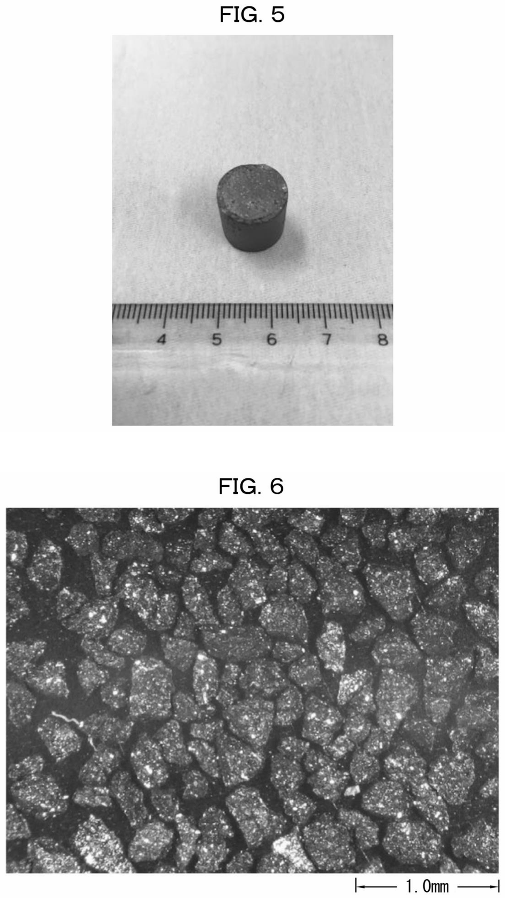

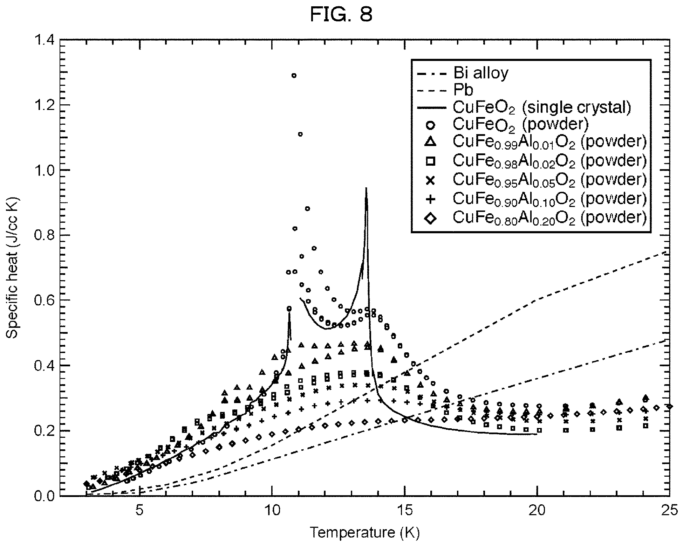

Figs. 2 and 3 are magnetic phase diagrams of CuFe₁₋ₓAlₓO₂ and CuFe₁₋ₓGaₓO₂, respectively, as functions of temperature and substitution amount x of Fe substituted with M. As shown in Figs. 2 and 3, CuFeO₂ in which x = 0 has a magnetic phase with low specific heat called a 4-sublattice antiferromagnetic phase (4SL phase) in a temperature region of not higher than 11 K. It is preferable to use Al as M and adopt 0.005 ≤ x ≤ 0.027 as the substitution amount x, because a phase transition from the 4SL phase to a ferroelectric incommensurate (FEIC) phase having high specific heat occurs at any temperature in the range of not lower than 4.2 K and not higher than 10 K in accordance with the amount of x (see Fig. 2). By utilizing such an increase in specific heat at a temperature of not higher than 10 K due to the substitution with Al in trace amount, the regenerator material 15 secures performance as a regenerator material. Note, however, that, as described later, even when the substitution amount x is set such that 0.027 < x, a gain in specific heat due to magnetic specific heat can be obtained. Therefore, the substitution amount x may be set such that 0.027 < x. Note that, in Example Group described with reference to Figs. 5 to 10, the substitution amount x is gradually increased from a state of x = 0 to a state of x = 0.2, and it can be seen that, as the substitution amount x increases, a peak value of specific heat decreases, but a tail of a peak of the specific heat extends toward a low-temperature side (see Fig. 8). According to Fig. 8, when specific heat in the case of x = 0 is used as a reference, x = 0.01 can be adopted in a case where importance is placed on a gain in specific heat at a temperature close to 8 K or at a temperature close to 9 K, and x = 0.02 can be adopted in a case where importance is placed on a gain in specific heat at a temperature close to 7 K. Note that, in the regenerator material 15, a plurality of types of CuFe₁₋ₓMₓO₂ having different substitution amounts x, such as x = 0.01 and x = 0.02, may be mixed and used. Further, referring to Fig. 2, when the substitution amount x is close to 0.015, the 4SL phase disappears, but a temperature of a phase transition from a partially disordered phase (PD phase) to the FEIC phase maintains a relatively high temperature of approximately 8.8 K. Therefore, it is more preferable that the substitution amount x satisfy 0.01 ≤ x ≤ 0.02.

Even in a case where Ga is used as M, a phase transition from the 4SL phase to the FEIC phase along with an increase in the substitution amount x is recognized. Note, however, that, in the case where M is Ga, a larger substitution amount x is required for the occurrence of a phase transition from the 4SL phase to the FEIC phase, as compared with the case where M is Al. For example, it is preferable to use Ga as M and adopt 0.013 ≤ x ≤ 0.056 as the substitution amount x, because the phase transition from the 4SL phase to the FEIC phase occurs in a low-temperature region of not lower than 4.2 K and not higher than 9 K in accordance with the amount of x (see Fig. 3). Note, however, that, as described later, even when the substitution amount x is set such that 0.056 < x, a gain in specific heat due to magnetic specific heat can be obtained. Therefore, the substitution amount x may be set such that 0.056 < x. Further, similarly to the case where Al is used as M, in the case where Ga is used as M, the substitution amount x can be determined as appropriate, and a plurality of types of CuFe₁₋ₓMₓO₂ having different substitution amounts x may be mixed and used. Further, referring to Fig. 3, when the substitution amount x is close to 0.018, the 4SL phase disappears, but a temperature of a phase transition from the PD phase to the FEIC phase maintains a relatively high temperature of approximately 8.7 K. Therefore, it is more preferable that the substitution amount x satisfy 0.015 ≤ x ≤ 0.035.

As described above, M may be Mn or may be Rh. A magnetic phase diagram in the case where Mn is used as M is described in, for example, Structural, magnetic, and ferroelectric properties of CuFe₁₋ₓMnₓO₂, K. Hayashi, R. Fukatsu, T. Nozaki, Y. Miyazaki, and T. Kajitani, PHYSICAL REVIEW B 87, 064418 (2013) and Impact of Mn3+ substitution on magnetization and electric polarization behavior in geometry frustrated CuFe₁₋ₓMnₓO₂, Guiling Xiao, Zhengcai Xia, Xiaoxing Zhang, Yujie Song, Sha Huang, Feng Yang1, Dequan Jiang, Han Deng, Zhongwen Ouyang, Liran Shi, Journal of Materials Science: Materials in Electronics (2019) 30:9531-9539. A magnetic phase diagram in the case where Rh is used as M is described in Spin-driven ferroelectricity in the delafossite CuFe₁₋ₓRhₓO₂(0 < x < 0.15), E. Pachoud, C. Martin, B. Kundys 1, Ch. Simon, A. Maignan, Journal of Solid State Chemistry 183 (2010) 344-349.

In an aspect of the present invention, using a compound having magnetic specific heat in a temperature region of not higher than 10 K as at least a portion of the regenerator material increases the cooling efficiency of He gas and allows substitution of at least a portion of the rare-earth metal, such as Ho and Er, contained in the conventional regenerator material. Therefore, it is preferable that the substitution amount x corresponding to each M be selected within the ranges shown below so that the FEIC phase is present at any temperature included in the temperature region of not higher than 10 K.
In a case where M is Al, 0.005 ≤ x.
In a case where M is Ga, 0.013 ≤ x.
In a case where M is Mn, 0.02 ≤ x.
In a case where M is Rh, 0.02 ≤ x.

In addition, even in a case where a metal element other than Al, Ga, Mn, and Rh is used as M, there can exist a material having magnetic specific heat in the temperature region of not higher than 10 K. CuFeO₂, which serves as a base material of CuFe₁₋ₓMₓO₂, is an ABO₂-type delafossite-type oxide, and it is considered that a part of the Fe site can be substituted with an element which enters the B-site. According to Hydrothermal Synthesis of Delafossite-Type Oxides, William C. Sheets, Emmanuelle Mugnier, Antoine Barnabe, Tobin J. Marks, Kenneth R. Poeppelmeier, Chem. Mater. 2006, 18, 7-20, a part of the Fe site can also be substituted with Sc, Cr, and Co, in addition to the above-described four elements. With regard to CuFe₁₋ₓMₓO₂ where M is Sc, Cr, or Co, the substitution amount x can be selected as appropriate so that a satisfactory magnetization specific heat is generated.

With regard to the upper limit of the substitution amount x, in a case where the substitution amount x is further increased from the FEIC phase having high specific heat, a magnetic phase transition to an oblique partially disordered phase (OPD phase) occurs, but the magnitude of the specific heat does not change dramatically. Note, however, that substituted Fe atoms are diluted as the substitution amount x increases; therefore, the absolute value of the specific heat decreases with decrease in composition ratio of Fe. In this way, the upper limit value of the substitution amount x is preferably not more than 0.1 and is preferably not more than 0.05.

### [Embodiment 2]

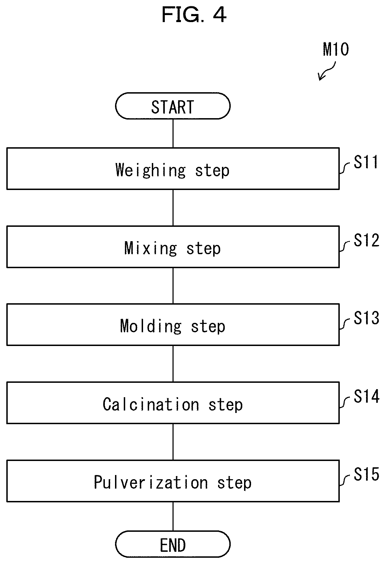

A production method M10 in accordance with Embodiment 2 of the present invention will be described with reference to Fig. 4. Fig. 4 is a flowchart of the production method M10. The production method M10 is a method for producing CuFe₁₋ₓMₓO₂ contained in the regenerator material 15 which has been described in Embodiment 1.

As illustrated in Fig. 4, the production method M10 includes a weighing step S11, a mixing step S12, a molding step S13, a calcination step S14, and a pulverization step S15.

The weighing step S11 is a step of weighing copper oxide (for example, Cu₂O), iron oxide (for example, α-Fe₂O₃), and an oxide of M (for example, α-Al₂O₃ in a case where M is Al) so that the composition ratio of Cu, Fe, and M in CuFe₁₋ₓMₓ after production is 1:1-x:x which is a desired composition ratio. These oxides are commercially available and are thus readily available.

The mixing step S12 is a step of mixing the copper oxide, the iron oxide, and the oxide of M which have been weighed in the weighing step S11. A method of mixing is not limited, but, for example, in a case where mass production is not performed, the oxides can be mixed using a mortar and a pestle. In addition, these oxides may be mixed in an appropriate amount of alcohol (for example, ethanol) which has been dripped into the mortar. Note that in a case where these oxides are mixed in an alcohol, it is preferable that the alcohol be volatilized after the mixing.

The molding step S13 is a step of pressure-molding the mixture of the oxides which has been obtained in the mixing step S12. The shape into which the mixture is pressure-molded is not limited and may be determined as appropriate, and examples of the shape include a pellet. Note that, as the molding step S13, a spray drying method can also be used instead of the pressure molding method. Note, however, that in a case where a spray drying method is used instead of the pressure molding method, the density of produced CuFe₁₋ₓMₓO₂ may decrease. Therefore, from the viewpoint of increasing the density of the produced CuFe₁₋ₓMₓO₂, the pressure molding method is preferably used as the molding step S13.

The calcination step S14 is a step of calcining the mixture of the oxides which has been obtained in the molding step S13. A calcination temperature, a calcination time, and an atmosphere in the calcination step S14 can be selected as appropriate in accordance with the findings obtained so far. For example, in a case where M is Al, 1100°C can be used as the calcination temperature, 48 hours can be used as the calcination time, and an Ar atmosphere can be used as the atmosphere. By carrying out the calcination step S14, the following chemical reaction proceeds, and CuFe₁₋ₓMₓO₂ is obtained. Note that, in the following chemical reaction, Al is used as an example of M.

Cu₂O+(1-x)Fe₂O₃+xAl₂O₃->2CuFe₁₋ₓAlₓO₂

The pulverization step S15 is a step of pulverizing pellets which have been obtained by the calcination in the calcination step S14. A method of pulverization is not limited, but, for example, in a case where mass production is not performed, the pellets can be pulverized using a mortar and a pestle. Note that, in the pulverized CuFe₁₋ₓMₓO₂, the particle diameter of CuFe₁₋ₓMₓO₂ is preferably not less than 180 µm and not more than 500 µm.

### [Additional remarks]

The present invention is not limited to the embodiments, but can be altered by a skilled person in the art within the scope of the claims. The present invention also encompasses, in its technical scope, any embodiment derived by combining technical means disclosed in differing embodiments.

### [Summary]

A regenerator material in accordance with Aspect 1 of the present invention is a regenerator material for a cryogenic refrigerator, the regenerator material containing a crystal of CuFe₁₋ₓMₓO₂ (where M is a metal element other than Fe). The present regenerator material employs a configuration in which, in a temperature region of not higher than 10 K, CuFe₁₋ₓMₓO₂ exhibits antiferromagnetism and has volumetric specific heat, which is specific heat per volume, higher than the volumetric specific heat of lead.

Lead is known as a material having relatively high specific heat in a low-temperature region. Since the specific heat of lead is attributable to lattice vibration, the specific heat of lead decreases as the temperature becomes lower (as the temperature approaches 4.2 K). On the other hand, a crystal of CuFe₁₋ₓMₓO₂ exhibits antiferromagnetism in a temperature region of not higher than 10 K, and has specific heat attributable to magnetic order (hereinafter also referred to as magnetic specific heat), in addition to the specific heat attributable to lattice vibration. Therefore, the specific heat of the crystal of CuFe₁₋ₓMₓO₂ is higher than the specific heat of lead in the temperature region of not higher than 10 K. Further, since the specific heat of a bismuth alloy which is substituted for lead is lower than the specific heat of lead, the specific heat of the crystal of CuFe₁₋ₓMₓO₂ is higher than the specific heat of the bismuth alloy in the temperature region of not higher than 10 K. According to the above configuration, the crystal of CuFe₁₋ₓMₓO₂ can cool He gas efficiently in the temperature region of not higher than 10 K in comparison with a regenerator material composed of lead and a regenerator material composed of a bismuth alloy. Therefore, the present regenerator material makes it possible to allow substitution of at least a portion of a bismuth alloy contained in the conventional regenerator material, while improving the cooling capacity. Further, CuFe₁₋ₓMₓO₂ does not contain a rare-earth metal. Thus, substituting, with CuFe₁₋ₓMₓO₂, at least a part of a compound containing a rare-earth metal, such as Ho and Er, contained in a regenerator material makes it possible to reduce the amount of rare-earth metal used in the regenerator material.

In addition, a regenerator material in accordance with Aspect 2 of the present invention employs, in addition to the configuration of the above-described regenerator material in accordance with Aspect 1, a configuration in which M is at least one of Al, Ga, Mn, and Rh.

Single crystals and polycrystals of CuFeO₂ have a Néel temperature that is, for example, close to 14 K, and have very high specific heat (typically, about 1 J/ccK at a peak value in the case of a single crystal, and about 1.3 J/ccK at a peak value in the case of a polycrystal) in a temperature region close to the Néel temperature. However, in such single crystals and polycrystals, since antiferromagnetic magnetic interaction tends to saturate in a relatively high temperature region (for example, a temperature region of not lower than 10 K or a temperature region close to 10 K), a gain in specific heat due to magnetic specific heat tends to decrease rapidly in a temperature region close to 10 K. According to the above configuration, M which is at least one of Al, Ga, Mn, and Rh weakens antiferromagnetism of CuFe₁₋ₓMₓO₂. Thus, the Néel temperature of CuFe₁₋ₓMₓO₂ decreases, and a peak value of specific heat decreases, but a tail of a peak of the specific heat extends toward a low-temperature side. Therefore, the present regenerator material can cool He gas more efficiently in the temperature region of not higher than 10 K.

In addition, a regenerator material in accordance with Aspect 3 of the present invention employs, in addition to the configuration of the above-described regenerator material in accordance with Aspect 2, a configuration in which M is Al, and a substitution amount x satisfies 0 ≤ x ≤ 0.2.

According to the above configuration, it is possible to obtain a gain in specific heat due to magnetic specific heat in the temperature region of not higher than 10 K.

In addition, a regenerator material in accordance with Aspect 4 of the present invention employs, in addition to the configuration of the above-described regenerator material in accordance with any one aspect of Aspects 1 to 3, a configuration in which CuFe₁₋ₓMₓO₂ has a particle diameter of not less than 180 µm and not more than 500 µm.

In order to enhance the efficiency of heat exchange with He gas, it is preferable to increase the surface area of CuFe₁₋ₓMₓO₂. The increase in the surface area of CuFe₁₋ₓMₓO₂ can be achieved by decreasing the particle diameter of CuFe₁₋ₓMₓO₂. However, decreasing the particle diameter of CuFe₁₋ₓMₓO₂ decreases the size of vacancies through which helium gas pass and results in an increase in pressure loss.

According to the above configuration, it is possible to optimize the surface area of CuFe₁₋ₓMₓO₂ and the pressure loss of He gas in a well-balanced manner.

Further, the particle diameter of CuFe₁₋ₓMₓO₂ correlates with the strength of antiferromagnetism exhibited by CuFe₁₋ₓMₓO₂. When CuFe₁₋ₓMₓO₂ has a particle diameter of not less than 180 µm, the antiferromagnetism of CuFe₁₋ₓMₓO₂ does not become excessively weak; therefore, it is possible to obtain desired magnetic specific heat in the temperature region of not higher than 10 K.

In addition, a regenerator material in accordance with Aspect 5 of the present invention employs, in addition to the configuration of the above-described regenerator material in accordance with any one aspect of Aspects 1 to 4, a configuration in which, while containing CuFe₁₋ₓMₓO₂ as a first compound, the regenerator material further contains a second compound having a Néel temperature in a temperature region of not lower than 5 K and not higher than 10 K.

According to the above configuration, it is possible to further increase the specific heat of the regenerator material in the temperature region of not lower than 5 K and not higher than 10 K. Therefore, the present regenerator material can cool He gas more efficiently in a temperature region close to 4.2 K within the temperature region of not higher than 10 K.

In addition, a regenerator material in accordance with Aspect 6 of the present invention employs, in addition to the configuration of the above-described regenerator material in accordance with Aspect 5, a configuration in which the second compound is Gd₂O₂S.

Examples of the second compound include Gd₂O₂S. Gd₂O₂S is suitable as the second compound because Gd₂O₂S has very high specific heat (typically 0.35 J/ccK) at temperatures close to 5 K. Further, according to this configuration, it is possible to ensure the specific heat in the temperature region of not higher than 10 K with use of CuFe₁₋ₓMₓO₂ while ensuring the specific heat in the temperature region close to 5 K. Thus, it is possible to reduce the amount of rare-earth metal used in comparison with a case in which the specific heat in the low-temperature region is ensured with use of only Gd₂O₂S without using CuFe₁₋ₓMₓO₂.

A regenerator in accordance with Aspect 7 of the present invention includes the regenerator material in accordance with any one aspect of Aspects 1 to 6 of the present invention.

An aspect of the present invention also encompasses a regenerator that includes the above-described regenerator material in accordance with an aspect of the present invention.

In addition, a regenerator in accordance with Aspect 8 of the present invention employs, in addition to the configuration of the above-described regenerator in accordance with Aspect 7, a configuration in which, while including the above-described regenerator material as a first regenerator material, the regenerator further includes a second regenerator material that includes a second compound having a Néel temperature in a temperature region of not lower than 5 K and not higher than 10 K, and the second regenerator material is disposed further toward a low-temperature side than the first regenerator material.

According to the configuration described above, He gas cooled by the first regenerator material is cooled by the second regenerator material. Thus, it is possible to cool He gas more efficiently.

A cryogenic refrigerator in accordance with an aspect of the present invention includes the regenerator in accordance with Aspect 7 or 8 of the present invention.

An aspect of the present invention also encompasses a cryogenic refrigerator that includes the above-described regenerator in accordance with an aspect of the present invention.

### Example Group

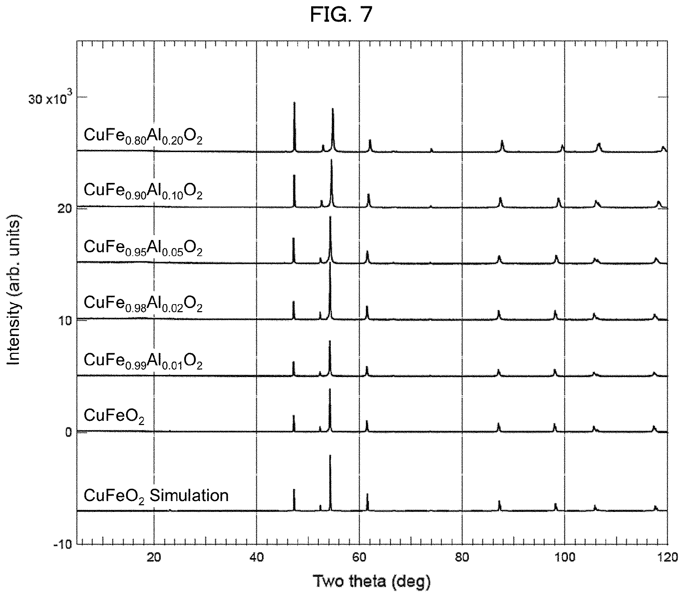

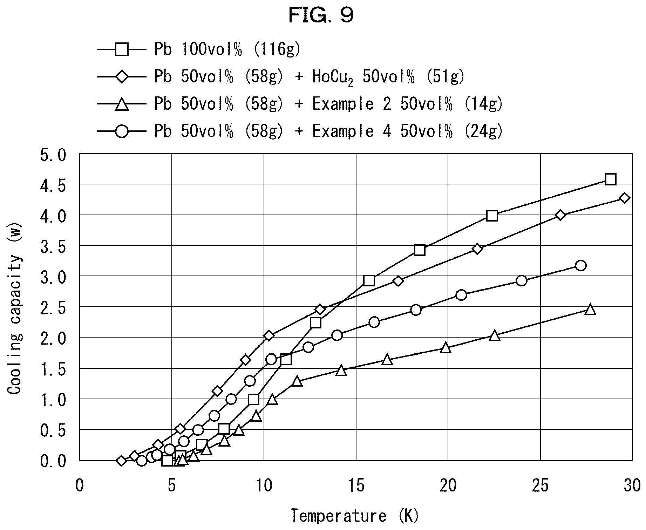

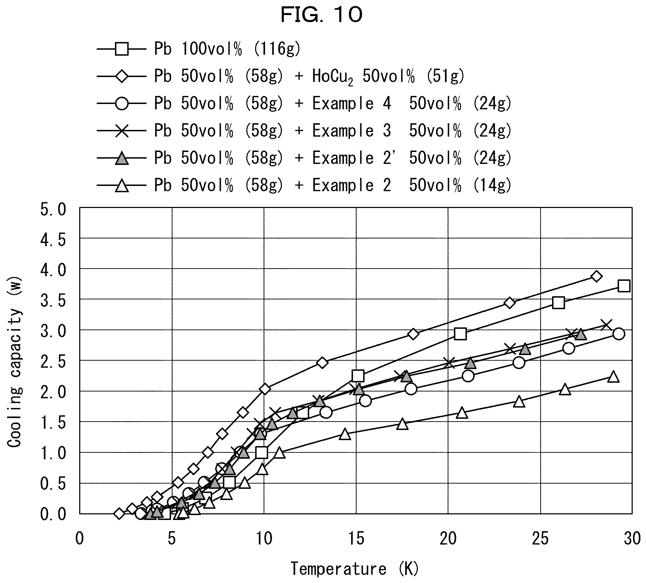

CuFe₁₋ₓAlₓO₂ that constitutes a part of the regenerator material 15 will be described with reference to Figs. 5 to 10. In the present Example Group, a single crystal of CuFeO₂ having a substitution amount x of x = 0, a polycrystal of CuFeO₂ in powder form having a substitution amount x of x = 0, and polycrystals in powder form respectively having substitution amounts x of x = 0.01, 0.02, 0.05, 0.10, and 0.20 were prepared. Hereinafter, the single crystal of CuFeO₂ is referred to as Example 1, the polycrystal of CuFeO₂ is referred to as Example 2, and the polycrystals of CuFe₁₋ₓAlₓO₂ where x = 0.01, 0.02, 0.05, 0.10, and 0.20 are referred to as Examples 3 to 7, respectively. Fig. 5 is an image of Example 4 in pellet form before the pulverization step S15 illustrated in Fig. 4 is carried out. Fig. 6 is an image of Example 4 in powder form after the pulverization step S15 illustrated in Fig. 4 has been carried out. Fig. 7 is X-ray diffraction patterns of Examples 2 to 7. Note that the lowermost part of Fig. 7 also shows calculated values of an X-ray diffraction pattern in a polycrystal of CuFeO₂. Fig. 8 is a graph showing temperature dependence of specific heat in Examples 1 to 7. Note that Fig. 8 also shows temperature dependence of specific heats of lead and bismuth. Fig. 9 is a graph showing temperature dependence of cooling capacities of a regenerator material 15 composed of Example 2 and lead, a regenerator material 15 composed of Example 4 and lead, a regenerator material composed of HoCu₂ and lead, which is Reference Example 1, and a regenerator material composed of lead. Fig. 10 is a graph showing temperature dependence of cooling capacities of a regenerator material 15 composed of Example 2 and lead, a regenerator material 15 composed of Example 3 and lead, a regenerator material 15 composed of Example 4 and lead, a regenerator material composed of HoCu₂ and lead, which is Reference Example 1, and a regenerator material composed of lead. In the measurement results shown in Fig. 9 and the measurement results shown in Fig. 10, refrigerators used for the tests have different performances. Therefore, the measurement results shown in Fig. 10 tend to show a lower cooling capacity than the measurement results shown in Fig. 9.

The single crystal of CuFeO₂ in Example 1 was produced by using a Floating-Zone method (see T. R. Zhao, M. Hasegawa, and H. Takei, J. Cryst. Growth 166, 408 (1996)). The polycrystal of CuFeO₂ in Example 2 was produced by the following two types of production methods: a production method in which the production method M10 illustrated in Fig. 4 was used as a base, and a spray drying method was used instead of the pressure molding method as the molding step S13; and the production method M10. Hereinafter, for the sake of distinction, the polycrystal of CuFeO₂ produced by the former production method is simply referred to as Example 2, and the polycrystal of CuFeO₂ produced by the production method M10 is referred to as Example 2'. CuFe₁₋ₓAlₓO₂ in Examples 3 to 7 were produced by using the production method M10. Note that, in Examples 2 to 7, Cu₂O having a purity of 99.9% (manufactured by Furuuchi Chemical Corporation), α-Fe₂O₃ having a purity of 99.9% (manufactured by Kojundo Chemical Laboratory Co., Ltd.), and α-Al₂O₃ having a purity of 99.99% (manufactured by Kojundo Chemical Laboratory Co., Ltd.) were used as starting materials. Further, in the calcination step S14, 1100°C was used as the calcination temperature, 48 hours were used as the calcination time, and an Ar atmosphere was used as the atmosphere. Note that, in the production method M10, in a case where Example 2 in which x = 0 is produced, α-Al₂O₃ need not be used.

Referring to Fig. 7, it was found that the pellets obtained in Examples 2 to 7 were polycrystals of CuFe₁₋ₓAlₓO₂.

Example 2 produced by using the spray drying method as the step to be carried out before the calcination step S14 had a low density as compared with Example 2' produced by using the molding step S13 as the step to be carried out before the calcination step S14 and Examples 3 to 7. Note that, even in a case where the polycrystal of CuFeO₂ is produced, using the molding step S13 as the step to be carried out before the calcination step S14 increases the density of the polycrystal of CuFeO₂ to the same level as that of Examples 3 to 7. Therefore, the polycrystal of CuFeO₂, which is Example 2', was also produced by using the production method M10 as described above.

Fig. 8 shows temperature dependence of specific heats measured in Examples 1 to 7. Note that Fig. 8 also shows, together, temperature dependence of the specific heats of lead and bismuth. Referring to Fig. 8, it can be seen that the specific heat of bismuth is lower than the specific heat of lead. Further, it is considered that the specific heat of a bismuth alloy obtained by mixing bismuth with another metal (for example, antimony) is lower than the specific heat of bismuth. Therefore, the specific heat of the bismuth alloy is considered to be lower than the specific heat of lead. As described above, bismuth and a bismuth alloy are used as substitute materials for lead, but have the problem of a low cooling capacity in the low-temperature region due to having lower specific heat than lead. Further, referring to Fig. 8, it was found that the specific heats of Examples 1 to 7 are higher than the specific heats of lead and bismuth in the temperature region of not higher than 10 K. Note that, when the specific heats of the present Example Group and the specific heat of bismuth were compared, it was found that the specific heats of Examples 1 to 6 are higher than the specific heat of bismuth in the temperature region of not higher than 15 K. Thus, using Examples of the present Example Group instead of bismuth or a bismuth alloy makes it possible to enhance the cooling capacity in the low-temperature region. Further, referring to Fig. 8, Examples 1 to 7 show magnetic specific heat in the temperature region of not higher than 10 K. Therefore, it was found that Examples 1 to 7 are antiferromagnetic.

A regenerator material 15 was constituted using the polycrystal (24 g) of Example 4 (CuFe_{0.98}Al_{0.02}O₂) obtained in this manner and lead (58 g). The ratio between Example 4 and lead in this regenerator material 15 is 1:1 in terms of filling space volume ratio. Here, lead constituting the regenerator material 15 together with Example 4 is an example of the third compound.

Further, a regenerator material 15 was constituted using the polycrystal (24 g) of Example 3 (CuFe_{0.99}Al_{0.01}O₂) obtained in this manner and lead (58 g). The ratio between Example 3 and lead in this regenerator material 15 is 1:1 in terms of filling space volume ratio. Here, lead constituting the regenerator material 15 together with Example 3 is an example of the third compound.

Further, a regenerator material 15 was constituted using the polycrystal (24 g) of Example 2' (CuFeO₂) obtained by the production method M10 and lead (58 g). The ratio between Example 2' and lead in this regenerator material 15 is 1:1 in terms of filling space volume ratio. Here, lead constituting the regenerator material 15 together with Example 2' is an example of the third compound.

Further, a regenerator material 15 was constituted using the polycrystal (14 g) of Example 2 (CuFeO₂) obtained by the spray drying method and lead (58 g). The ratio between Example 2 and lead in this regenerator material 15 is 1:1 in terms of filling space volume ratio. Here, lead constituting the regenerator material 15 together with Example 2 is an example of the third compound. As described above, Example 2 obtained by carrying out the spray drying method before the calcination step S14 was carried out has a lower density than Example 2', Example 3, and Example 4 which were obtained by the production method M10. Due to such a low density, Example 2', Example 3, and Example 4 having the same volume as 58 g of lead were all 24 g, whereas Example 2 having the same volume as 58 g of lead was 14 g.

Further, as regenerator materials for comparison with these regenerator materials 15, a regenerator material composed of HoCu₂ (51 g) and lead (58 g) and a regenerator material composed of lead (116 g) were used. The ratio between HoCu₂ and lead in the regenerator material composed of HoCu₂ (51 g) and lead (58 g) is 1:1 in terms of filling space volume ratio.

Fig. 9 shows the results obtained by measuring cooling capacities under the conditions where regenerators that were equipped with the regenerator material 15 containing Example 2, the regenerator material 15 containing Example 4, the regenerator material containing HoCu₂, and the regenerator material composed of lead, respectively, were prepared and each incorporated into a GM refrigerator 10. Referring to Fig. 9, it was found that the cooling capacity of the regenerator material 15 containing Example 4 is higher than the cooling capacity of the regenerator material composed of lead in the temperature region of not higher than 10 K, and approaches the cooling capacity of the regenerator material containing HoCu₂.

In addition, Fig. 10 shows the results obtained by measuring cooling capacities again under the conditions where regenerators that were equipped with the regenerator material 15 containing Example 2, the regenerator material 15 containing Example 2', the regenerator material 15 containing Example 3, the regenerator material 15 containing Example 4, the regenerator material containing HoCu₂, and the regenerator material composed of lead, respectively, were prepared and each incorporated into a GM refrigerator 10. Referring to Fig. 10, it was found that the cooling capacities of the regenerator material 15 containing Example 2', the regenerator material 15 containing Example 3, and the regenerator material 15 containing Example 4 are all higher than the cooling capacity of the regenerator material composed of lead in the temperature region of not higher than 10 K, and approach the cooling capacity of the regenerator material containing HoCu₂.

In addition, referring to Figs. 9 and 10, the cooling capacity of the regenerator material 15 containing Example 2 is lower than the cooling capacity of the regenerator material composed of lead in the temperature region of not higher than 10 K. However, the low cooling capacity of the regenerator material 15 containing Example 2 results from the low density of Example 2. A polycrystal of CuFeO₂ produced by the production method M10 has a density substantially equal to the densities of Examples 3 and 4. In this case, the cooling capacity of a regenerator material 15 containing the polycrystal of CuFeO₂ is considered to be approximately 24/ 14 times the cooling capacity of the regenerator material 15 containing Example 2. In fact, as shown in Fig. 10, it was found that the cooling capacity of the regenerator material 15 containing Example 2', similarly to the regenerator material 15 containing Example 3 and the regenerator material 15 containing Example 4, is higher than the cooling capacity of the regenerator material composed of lead in the temperature region of not higher than 10 K, and approaches the cooling capacity of the regenerator material containing HoCu₂.

From the above results, CuFe₁₋ₓAlₓO₂ contained in the regenerator material 15 can cool He gas efficiently in the temperature region of not higher than 10 K in comparison with the regenerator material composed of lead. That is, CuFe₁₋ₓAlₓO₂ contained in the regenerator material 15 can cool He gas efficiently in the temperature region of not higher than 10 K in comparison with the regenerator material composed of a bismuth alloy. Further, CuFe₁₋ₓAlₓO₂ contained in the regenerator material 15 does not contain a rare-earth metal. Thus, substituting, with CuFe₁₋ₓMₓO₂, at least a part of a compound containing a rare-earth metal, such as Ho and Er, contained in a regenerator material makes it possible to reduce the amount of rare-earth metal used in the regenerator material. Therefore, it was found that the regenerator material 15 can reduce the amount of rare-earth metal, such as Ho and Er, used in a regenerator material that constitutes a cryogenic refrigerator including a Gifford-McMahon refrigerator as an example.

### Reference Signs List

- 10:: Gifford-McMahon (GM) refrigerator
- 11:: compressor
- 12:: regenerator
- 13, 14:: a pair of stoppers
- 15:: regenerator material

## Claims

1. A regenerator material for a cryogenic refrigerator, said regenerator material comprising a crystal of CuFe₁₋ₓMₓO₂ (where M is a metal element other than Fe), wherein
in a temperature region of not higher than 10 K, CuFe₁₋ₓMₓO₂ exhibits antiferromagnetism and has volumetric specific heat, which is specific heat per volume, higher than the volumetric specific heat of lead.

2. The regenerator material according to claim 1, wherein M is at least one of Al, Ga, Mn, and Rh.

3. The regenerator material according to claim 2, wherein M is Al, and a substitution amount x of Fe substituted with M satisfies 0 ≤ x ≤ 0.2.

4. The regenerator material according to any one of claims 1 to 3, wherein CuFe₁₋ₓMₓO₂ has a particle diameter of not less than 180 µm and not more than 500 µm.

5. The regenerator material according to any one of claims 1 to 3, wherein while comprising CuFe₁₋ₓMₓO₂ as a first compound, said regenerator material further comprises a second compound having a Néel temperature in a temperature region of not lower than 5 K and not higher than 10 K.

6. The regenerator material according to claim 5, wherein the second compound is Gd₂O₂S.

7. A regenerator comprising the regenerator material recited in claim 1.

8. The regenerator according to claim 7, wherein
while comprising the regenerator material as a first regenerator material, said regenerator further comprises a second regenerator material that comprises a second compound having a Néel temperature in a temperature region of not lower than 5 K and not higher than 10 K, and
the second regenerator material is disposed further toward a low-temperature side than the first regenerator material.

9. A cryogenic refrigerator comprising the regenerator recited in claim 7 or 8.
